# EUROPEAN PATENT APPLICATION

(11) **EP 4 776 274 A1**
(43) Date of publication of application: **15.07.2026**
(21) Application number: 25150762.0
(22) Date of filing: 08.01.2025
(51) Int. Cl.: G10L 15/22, G10L 15/183, G06F 3/16

(54) **SPEECH CONTROL OF A SYSTEM**

(71) Applicant: Koninklijke Philips N.V., 5656 AE Eindhoven (NL)
(72) Inventor: EISENHARDT, Marc, 5656 AG Eindhoven (NL); BULUT, Murtaza, 5656 AG Eindhoven (NL)
(74) Representative: Philips Intellectual Property & Standards

(57) **Abstract**

The present disclosure provides a method for speech control of a system. The method includes predicting an input for control of the system based on detected speech of a user, generating a confirmation code, displaying the predicted input and the generated confirmation code, and responsive to receiving a further input from the user including the confirmation code, generating a control signal for controlling the system based on the predicted input. The method enhances accuracy and reliability in speech-controlled systems by incorporating user verification through dynamic generation of a confirmation code to be displayed with the predicted input.

## Description

### FIELD OF THE INVENTION

The present invention relates to speech-based control, and more specifically to methods and controllers for confirming predicted voice inputs.

### BACKGROUND OF THE INVENTION

Speech-based control systems have become increasingly prevalent in various applications, from smart home devices to subject monitoring systems. These systems allow users to interact with devices and control their functions using voice inputs, providing a hands-free and intuitive method of operation. As natural language processing and machine learning technologies have advanced, the accuracy and capabilities of speech recognition systems have significantly improved.

However, speech-based control systems still face challenges in accurately interpreting user intentions, especially in noisy environments or when dealing with accents, dialects, or speech impediments. Misinterpretation of voice inputs can lead to unintended actions, potentially causing frustration for users or even safety concerns in critical applications. Additionally, traditional speech recognition systems often require users to use specific phrases or keywords, limiting the natural flow of interaction.

Another significant challenge in speech-based control systems is the need for immediate feedback and confirmation of recognized inputs. Users may be uncertain whether their voice input was correctly interpreted, leading to hesitation or repeated attempts at issuing inputs. This lack of immediate visual or auditory confirmation can reduce user confidence and overall system usability.

Accordingly, speech-based control systems sometimes employ a confirmation stage to verify understanding of the input. This confirmation stage requires the user to provide feedback, such as a simple yes/no confirmation, or repetition of the input. In some cases, the input determined by the system may be presented to the user, and/or a preview of the execution of the input may be presented to the user (either visually, or by audio repetition). In more complex embodiments, the confirmation stage may take into account contextual information, such as importance of accuracy of the action or likelihood of input interpretation error. However, it will be appreciated that this confirmation stage renders the speech-based control system slow and inconvenient to use. In addition, the confirmation itself may be misunderstood by the system, particularly in noisy environments and contexts where multiple speech-based control systems co-exist.

Furthermore, speech-based control systems typically require a complete input from the user. That is, they require that the input from the user is completed before the system predicts the input from the speech of the user. As a result, providing inputs to the system may prove cumbersome and slow for the user.

It has been appreciated that a speech control system is needed that overcomes one or more of these problems.

### SUMMARY OF THE INVENTION

The invention is defined by the claims.

According to an aspect of the present disclosure, a method for speech control of a system is provided. The method comprises: predicting an input for control of the system based on detected speech of a user; generating a confirmation code; displaying the predicted input and the generated confirmation code; and responsive to receiving a further input from the user including the confirmation code, generating a control signal for controlling the system based on the predicted input.

The present invention provides novel concepts for speech control that enhances accuracy and user experience through a dynamic confirmation process. By presenting the predicted input based on detected speech and a generated confirmation code, the invention addresses common challenges in speech recognition systems, such as misinterpretation of inputs and lack of immediate feedback.

Central to the invention is the concept of displaying both the predicted input and a generated confirmation code to the user. This visual feedback allows users to verify the system's interpretation of their speech before execution, significantly reducing the likelihood of erroneous actions. Indeed, it requires the user to observe the display upon which the predicted input is provided, as the user needs to know the confirmation code (e.g., by reading the confirmation code) in order to provide the confirmation code. The confirmation process is completed when the user provides a further input including the confirmation code, at which point the system generates a control signal based on the predicted input.

In existing systems, a standard confirmation input may need to be provided in order to verify the predicted input. For example, the user may need to confirm that the input is accurate with the word "yes" or may need to repeat the input to reduce the chance that the predicted input is inaccurate. However, the user may learn to automatically utter the standard confirmation input to speed up their workflow. This can lead to errors as the user may omit the step of actually checking that the predicted input is correct. Furthermore, in situations where multiple speech control systems are present, speech from other users attempting to control other systems may be erroneously interpreted as the confirmation.

The generation of the confirmation code overcomes one or more of these issues by providing a dynamic confirmation code. The dynamic confirmation code may be unique in that it may be adapted for the particular input, may be different to subsequent and preceding confirmation codes (within a certain time window), and/or may differ from confirmation codes required for other nearby speech control-based systems. This requires the user to know the confirmation code to provide an actionable confirmation, increasing the likelihood that they have properly assessed the predicted input.

In other words, by generating a dynamic confirmation code, the system may ensure that the user has (i) checked the predicted input provided alongside the confirmation code; and (ii) confirmed that the predicted input is accurate. (i) is achieved by the fact that the confirmation code is generated, rather than being a pre-established confirmation code (e.g., "yes" or a repetition of the input), and so requires the user to read the confirmation code. (ii) is achieved by the fact that the use of the generated confirmation code, which may make it less likely for the system to accidently interpret a confirmation, for example, due to the user (or another individual) providing the confirmation in their normal speech ("yes" is a commonly used word), or due to other individuals providing a similar confirmation to nearby speech control-based systems.

By implementing this comprehensive approach to speech control confirmation, the invention offers several advantages. It increases user confidence in, and efficiency of, speech-controlled systems, reduces errors and unintended inputs, and provides a more intuitive and natural interaction experience. Further, the speech control confirmation system facilitates fast, continual interaction with the system, allows the user to interact with multiple systems at once with minimal confusion, and allows multiple users to interact with the same system at the same time with minimal confusion. The potential adaptability and contextual awareness also allow for improved performance across various applications and user scenarios, making it a versatile solution for speech-based control in diverse environments.

In some embodiments, the step of generating the confirmation code is performed responsive to detecting speech of the user or predicting the input.

That is, the confirmation code is only generated once the speech of the user is detected/received, or the input is predicted. This approach ensures that the confirmation code is generated in a timely manner once needed, whilst reducing superfluous generation of the confirmation code, or need to store the confirmation code for long periods of time.

The confirmation code may be generated based, at least in part, on characteristics of the system, characteristics of the user, previously generated confirmation codes, contextual information of the system and/or contextual information of the user.

This feature allows for the creation of confirmation codes that potentially improve the user experience and reducing errors. To this end, the confirmation code may be unique to the given system, user, and/or context. This may avoid confusion as different users provide confirmation codes to different systems. Equally, by taking into account previously generated confirmation codes (e.g., confirmation codes that have been generated within a recent time window), repetition of the confirmation code may be avoided to once again reduced confusion and error rate.

Further, the confirmation code may be generated based, at least in part, on characteristics of the predicted input.

This approach tailors the confirmation code to the specific input, potentially providing a more appropriate confirmation code for the given input. This may make the provision of the confirmation code more intuitive for the user and reduce confusion. Indeed, if the confirmation code is based on the characteristics of the predicted input, this may improve the speed of interaction for the user and may streamline the generation of the control signal. Furthermore, as the confirmation code is related to characteristics of the input, this may increase contextual awareness of the user (as they are indirectly told about characteristics of the predicted input via the confirmation code). This may help to reduce cognitive bias-related errors.

More specifically, the method may further comprise processing the characteristics of the predicted input to identify an input category and/or control signal category. In this case, the confirmation code may be generated based, at least in part, on the identified input category and/or the identified control signal category.

This categorization allows for more targeted and relevant confirmation codes, potentially improving user comprehension and system efficiency. Confirmation codes that are grouped according to input category or control signal category may result in more predictable codes for the user to understand and relay to verify the predicted input.

In addition, the length and/or type of the generated confirmation code may be based on a target error rate of prediction of the input, an occurrence rate of the predicted input, and/or characteristics of the predicted input.

This adaptive approach to confirmation code generation can balance security with user convenience, adjusting the complexity of the code based on the potential impact or frequency of the predicted input.

In some cases, at least part of the confirmation code may include phonetic words.
The use of phonetic words can improve clarity in spoken confirmation, reducing errors due to misheard or mispronounced confirmation codes. This may be particularly useful in chaotic environments to improve ease of interpretation of the confirmation code.

In further cases, at least part of the confirmation code may include digit combinations. The use of digit combinations may be particularly beneficial when the user provides the confirmation code by non-speech means. Indeed, the user may find it quicker (i.e., more intuitive) to provide digit combinations when the combination code is typed, for example.

The method may further comprise analysing a first detected audio signal captured prior to displaying the predicted input and confirmation code, with a first speech analysis algorithm, to predict the input.

This initial analysis step forms the basis for the system's prediction, enabling the subsequent confirmation process.

In some embodiments, the first speech analysis algorithm may generate recognized text corresponding to speech of the user, with the prediction of the input based on the recognized text. The method may then further comprise augmenting the recognized text based on expected input features to generate augmented recognized text and basing the prediction of the input on the augmented recognized text.

This text augmentation process can improve the accuracy of input prediction by incorporating expected features or context. Indeed, it may be the case that the user omits or obscures certain words, with the context used to fill in the gaps. This improves the chance that the input matches the intent of the user.

Furthermore, the method may also comprise analysing a second detected audio signal captured responsive to displaying the predicted input and confirmation code, with a second speech analysis algorithm, to identify the confirmation code in the second detected audio signal.

This two-stage analysis approach allows for specialized processing of the confirmation code, potentially improving accuracy in confirmation detection. Indeed, the second speech analysis algorithm may be adapted specifically (e.g., trained) for identifying confirmation codes in speech.

In some embodiments, the method may include determining whether the user has spoken a complete input based on the detection of user speech characteristics of the detected speech and displaying the predicted input and the confirmation code responsive to determining that the user has spoken a complete input.

This feature helps ensure that the system only prompts for confirmation when a complete input has been detected, reducing unnecessary interruptions.

Additionally or alternatively, the method may further comprise determining whether the predicted input is executable for controlling the system and displaying the predicted input and the confirmation code responsive to determining that the predicted input is executable.

This step prevents the system from requesting confirmation for non-executable inputs, improving efficiency and user experience.

In some embodiments, the method may also include updating the predicted input based on a further detected speech of the user, generating an updated confirmation code, and displaying the updated predicted input and the updated confirmation code.

This dynamic updating feature allows the system to adapt to changes or corrections in the user's speech input, enhancing accuracy and user control. Therefore, once the user has recognised that the system has successfully interpreted the intent of their input, they may utter the confirmation code associated with said predicted input and the control signal may be generated accordingly.

According to a further aspect of the present disclosure, a computer program is provided. The computer program comprises computer program code means adapted, when said computer program is run on a computer, to implement a method for speech control of a system as described herein.

According to another aspect of the present disclosure, a controller for a system is provided. The controller comprises: a speech processing unit configured to predict an input for control of the system based on detected speech of a user; a confirmation unit configured to generate a confirmation code; a user interface configured to display the predicted input and the generated confirmation code; and an output interface configured, responsive to the controller receiving a further input from the user including the confirmation code, to generate a control signal for controlling the system based on the predicted input.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
FIG. 1 illustrates a flowchart for a method of speech control of a system, according to aspects of the present disclosure;
FIG. 2 depicts a flowchart for another method of speech control of a system, according to an embodiment;
FIG. 3 shows a flowchart for a further method of speech control of a system, in accordance with example embodiments;
FIG. 4 illustrates a block diagram of a controller for speech control system, according to aspects of the present disclosure; and
FIG. 5 is a simplified block diagram of a computer within which one or more parts of an embodiment may be employed.

### DETAILED DESCRIPTION OF THE EMBODIMENTS

The invention will be described with reference to the Figures.
It should be understood that the Figures are merely schematic and are not drawn to scale. It should also be understood that the same reference numerals are used throughout the Figures to indicate the same or similar parts.

It should also be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. The mere fact that certain measures are recited in mutually different dependent claims does not indicate that a combination of these measures cannot be used to provide an advantage.

The present disclosure provides methods and systems for speech control of systems. Speech control technology has become increasingly prevalent in various applications, offering users a hands-free and intuitive way to interact with devices and systems. However, speech recognition systems may sometimes misinterpret user commands, leading to unintended actions or errors and/or loss of time (due to the need for correction). The present invention addresses this challenge by incorporating a novel confirmation mechanism into the speech control process, enhancing accuracy and user confidence in speech-controlled systems.

Accordingly, it is proposed to predict an input based on detected speech, generating a confirmation code, displaying the predicted input and confirmation code to the user, and generating a control signal upon receiving user confirmation. This approach allows users to verify the system's interpretation of their speech input before any action is taken based on a confirmation code that is dynamically generated.

In other words, speech from a user is detected, and an input (e.g., a command) is predicted based on the speech from the user. A confirmation code that needs to be repeated by the user (spoken, typed, or otherwise recited by the user) is generated, and displayed alongside the predicted input. In contrast to systems with a standard confirmation code/word, this means that the user must read the confirmation code to provide an actionable verification of the predicted input. Thus, there is an improved chance that the user has actually understood the input that the system has predicted. In addition, it reduces the chance that the confirmation code is accidently entered by usual actions of the user, by another individual in the vicinity, or by the user or another individual interacting with another speech control-based system.

By combining speech recognition technology with a user-friendly confirmation process, the invention aims to make speech control more accessible and dependable across a wide range of applications. In particular, this may be suitable when input accuracy and speed is paramount (e.g., critical applications such as in healthcare, or automotive systems), and/or in hectic environments. The described concepts can be adapted to provide control of various types of electronic devices and systems, offering a versatile solution for implementing accurate and user-verified speech control functionality.

By way of brief explanation, speech control systems have become increasingly prevalent in various electronic devices and applications, offering users a hands-free and intuitive way to interact with technology. These systems typically employ speech recognition algorithms to interpret user commands and execute corresponding actions. However, current speech control systems face several limitations and disadvantages that can impact their effectiveness and user experience.

One significant limitation of existing speech control systems is accuracy. Speech recognition algorithms may struggle to correctly interpret user commands, especially in noisy environments or when dealing with accents, dialects, or speech impediments. This can lead to misinterpretation of user intentions and execution of incorrect commands. Another disadvantage of current systems is the lack of immediate user feedback. Many speech control systems execute commands without providing users an opportunity to verify the interpreted input. This can result in unintended actions being performed, potentially causing frustration or requiring additional steps to correct errors.

The potential for errors in command execution is a notable concern in existing speech control systems. Without a robust verification mechanism, systems may carry out incorrect or unintended actions based on misinterpreted speech input. This can be particularly problematic in scenarios where precise control is crucial, such as in medical applications or vehicle control systems.

Current speech control systems often lack context awareness, which can lead to misinterpretation of ambiguous commands. For example, a command to "turn on the lights" may be executed incorrectly if the system does not consider the user's location or the specific lights intended to be controlled. Privacy concerns also present a challenge in current speech control systems. Continuous listening for wake words raises questions about data security and user privacy, particularly in systems that rely on cloud-based processing of speech input.

Furthermore, existing speech control systems require a full input to be spoken by the user and to be recognised by the control system, before the control system is ready to receive a confirmation. A predetermined/static confirmation (e.g., yes, no) is required to be entered by the user following completion of the input.

These limitations and disadvantages of current speech control systems highlight the need for improved approaches that address accuracy, user feedback, error prevention, and personalization to enhance the overall user experience and reliability of speech-controlled devices and applications.

The present invention addresses several disadvantages of existing speech control systems by introducing a novel approach that enhances accuracy, provides immediate user feedback, and reduces the likelihood of executing incorrect commands by generation of a confirmation code for each predicted user input.

The confirmation process significantly reduces the risk of executing unintended commands. By requiring the user to provide a further input that includes the confirmation code, the system ensures that the predicted input accurately reflects the user's intention. Further, as the confirmation code is dynamically generated, the rate of occurrence of accidental confirmation or confirmation without appreciation of the predicted input is reduced.

In addition, rather than awaiting the user to speak a complete command before requesting confirmation, a faster confirmation sequence is enabled by the prediction of the input. That is, by predicting the input based on user speech, the user may confirm the input as soon as the system has predicted an input that aligns with the users goals. That is, the user may learn how to interact with the system using shortcuts. For example, the user may be trained or learn how to quickly trigger the recognition of certain inputs, and then use these strategies when interacting with the system (potentially uttering shorter speech). If the user does not think that the predicted input matches their intended input, then they may simply continue to speak, and the speech control system will predict updated inputs based on the speech with a new associated confirmation code (so as to not confuse confirmation of the updated predicted input with the previously generated inputs).

In healthcare settings, the speech control system can assist medical professionals in hands-free operation of equipment, hand-free data entry, and hands-free interaction with subject monitors. This can be particularly useful in sterile environments where touch-based interfaces are impractical. However, all to-be-performed actions must be evaluated and approved by the corresponding clinicians in charge. The speech-based interfaces must therefore enable accurate, effortless and flexible review and approval capabilities if they are to be accepted in clinical practice.

In other words, for healthcare related devices and systems, execution of inputs without user confirmation is dangerous and therefore not desired. Any command that needs to be executed must be checked and confirmed by the user. The confirmation process can be achieved by asking the user to verify their input by audio output. However, this is not desired in healthcare because the environment is already crowded with different sounds, and moreover the system speech or sounds can interfere with the medical (e.g., alarm) sounds. Another disadvantage is that such communication can be time consuming and can delay the command execution time. Therefore, it is preferred that no audio output is generated by the speech recognition system.

For interacting with patient monitors or central monitoring station, a confirmation process via visual feedback is preferred. The system can show the recognized text on the screen and ask/wait for user confirmation. The user can provide their confirmation using a device (e.g. by clicking on screen, on wearable, etc.) but this may not be desired in a clinical context for hygiene reasons, as it would need extra effort by the user (e.g., locate the device and click), and the additional delay involved. Ideally, hands-free (e.g., speech based) confirmation from the user is provided. From different hands-free communication options, speech is the best one due to its versality, simplicity, and low cost. Nevertheless, it should be appreciated that in other clinical contexts, entering the confirmation code via non-speech input means may be desirable.

A simple confirmation using everyday (short) words, such as yes, no, correct, positive, etc. is possible. However, considering the noisy healthcare environment the recognition accuracy for these words may not be optimal. Moreover, a more serious danger of using everyday words for confirmation may be due to the presence of other people in the environment. Other people may use the selected/programmed confirmation words in their normal speech, and these may be mistaken as confirmation by the system. Another disadvantage of using everyday words may be that the clinician may need to stop speaking (give enough pause) to make sure these words are recognized accurately.

An improved approach provided by embodiments of the invention is to use generated confirmation codes. In this case, the generated confirmation code may be non-common in a healthcare context. In addition, it may be assured that confirmation codes used to confirm inputs for different medical devices are substantially different. Furthermore, phonetic words and/or digit combinations may also be used to ensure higher recognition accuracy (in noisy healthcare context).

Proposed embodiments of the invention may therefore address the above concerns with speech-based control of medical devices by presenting a real-time continuous speech command verification solution using dynamically generated confirmation codes, making it possible for clinicians to interact naturally and efficiently with the system, for example to control system settings, control algorithm settings (e.g., real-time ECG signal based alarm generation), sensor settings (e.g., SPO2 sensor calibration), change alarm settings, interact with Al-based systems (e.g., chatbots), control medical equipment, perform data entry or perform data manipulation in electronic medical record systems, and make notes.

To be clear, whilst control of medical devices has been exemplified above, it will be readily appreciated that the invention may be applied to a wide variety of systems. That is, the disclosed embodiments may be applied and adapted for speech control of many devices, systems, apparatus, and applications. For example, embodiments may be applied to smart home control systems, automotive applications, VR/AR applications, and gaming, amongst others.

By way of example, control of generative AI applications may be performed by disclosed embodiments. Presently, when interacting with generative AI applications, a user enters a prompt, and in many cases this user input is transformed into another prompt, and this other prompt is used as input to the generative AI application.

Disclosed embodiments of the invention may intuitively fit with this workflow. The user may interact with generative AI applications via speech, in order to control the application to perform a certain task (e.g., the user provides a prompt). The generative AI application may then display a predicted input (e.g., a transformed prompt) based on the speech alongside the confirmation code. The user may then confirm that they wish to execute the prompt by entering the confirmation code. In other words, in the present invention the confirmation code is used as a way to confirm the transformed prompt. Of course, it can be used also to confirm the prompt entered directly by the user.

In other cases, the generative AI application acts as an intermediate interface that is used to control a system (e.g., a particular device, another application, etc.). For example, the user may ask something, and the generative AI may be used to interpret/process the users speech (i.e., processes what the user has asked), and generate a command that is to be executed by the system controlled by the generative AI application. In this case, the confirmation code may be used as a means to get a verification from the user that the output generated by the generative AI application can be used to command the system.

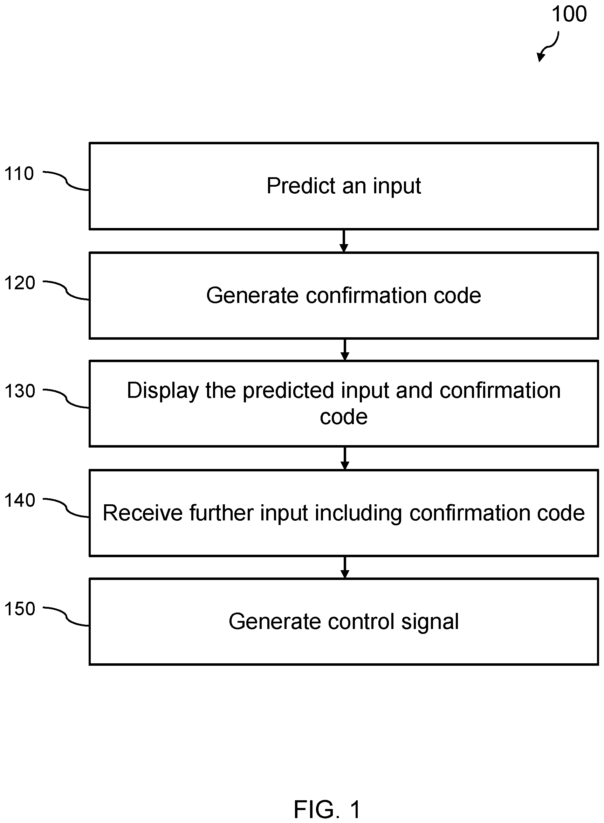

A method for speech control of a system is illustrated in the form of a flow diagram in FIG. 1.

In step 110, an input is predicted based on detected speech of a user. This step involves analysing the user's speech to determine the intended command or action for controlling the system (i.e., to determine an input for the system).

The user speech may be received in the form of an audio signal. In some cases, the audio signal may include both the user speech and surrounding noise (e.g., noise made in proximity to the user during speech).

The prediction of the input may utilize speech analysis algorithms to interpret the user's spoken words and convert them into a predicted input for system control. For instance, the speech analysis algorithm may generate recognised text corresponding to the detected speech. The speech analysis algorithm may thus transcribe the speech as text. The predicted input may then be based on the recognised text. In some cases, the speech analysis algorithm may then employ natural language processing techniques to translate the recognised text to an input for the system.

As an alternative, the speech analysis algorithm may directly translate the detected speech of the user to an input. For example, machine-learning based methods may be employed to process a speech signal of detected speed of the user into a predicted input. Of course, any other known method for converted a detected speech (e.g., in the form of an audio signal) into a predicted input may be performed.

In some cases, the detected speech of the user may be filtered, augmented, or otherwise pre-processed before generation of the input. That is, the detected speech may be altered to be in a form more suitable for prediction of the input. In some cases, noise cancellation and audio filtering techniques may be employed to isolate speech from background noise, for instance. In other cases, the audio in addition to the user speech may be preserved and processed, such that both the user speech and background sounds can be used when predicting the input.

Specifically, the detected speech may be augmented based on expected input features. Indeed, it may be the case that the user omits certain words in their natural speech that are required for certain inputs. In this case, the system may augment the detected speech based on expected input features in order to predict an input. For example, in the case that recognized text is generated corresponding to the detected speech, the recognized text may be augmented based on expected input features to generate augmented recognized text. The predicted input may then be based on the augmented recognized text.

In addition, the detected speech may be augmented based on background noise/sounds mentioned above. Indeed, the background noise may provide clues as to the intended input of the user. These clues may be contextual clues (e.g., an alarm noise is occurring, and therefore the input may relate to the alarm), or may be related to speech of other individuals.

To be clear, the speech of the user may be constantly recorded/detected, and an input may be predicted whenever the detected speech is determined to comprise an input for the system. Alternatively, the speech of the user may be detected responsive to a trigger, such as the user uttering a trigger word, the system generating an output for which a response is expected, or a button being pressed for example. In any case, the speech may be detected in real time to predict the input responsive to user speech as quickly as possible.

Of course, the speech may be detected using any known means. In some aspects, one or more microphones may be used to capture audio input from a user. These microphones may be integrated into the system, connected externally, or may be wearable by the user.

In step 120, the method proceeds to generate a confirmation code. The confirmation code serves as a verification mechanism to ensure the accuracy of the predicted input.

In some instances, the confirmation code may comprise phonetic words. The phonetic alphabet words (e.g., alpha, beta, charlie, and so on) are formulated as they are easy to understand and differentiate. As discussed below, the confirmation code may be identified in further detected speech of the user. In this case, the use of phonetic words may be particularly advantageous as they are not commonly used in speech and have audio characteristics that are more straightforward to differentiate. That is, phonetic alphabet words provide clear advantages in noisy environments, because they are easier to recognize by speech analysis algorithms, and because they can be distinct from everyday language words.

In further cases, the confirmation code may comprise one or more numbers. Alternatively, the confirmation code may comprise non-phonetic words. Further, the confirmation code may comprise various symbols, such as punction marks. Of course, the confirmation code may comprise a combination of phonetic words, non-phonetic words, numbers, punctuations, etc.

The generation of the confirmation code may be performed in response to detecting the user's speech or predicting the input. That is, the confirmation code is generated once the user has uttered an input, and/or the input is predicted.

In a first embodiment, the confirmation code may be generated in a random manner. That is, for each predicted input, a random associated confirmation code is generated. The generated confirmation code may be random within the definition of a ruleset (e.g., one four letter word chosen from a list and a selection of numbers). In other cases, the generated confirmation code may be a completely random selection of letters, numbers, and may have a random length (within reason).

In another embodiment, the confirmation code may be generated based on characteristics of the system. That is, at least a part of the confirmation code may be associated with a characteristic of the system, such as an identity of the system, a type of system, a use of the system, etc. Accordingly, there may be different confirmation codes generated for different systems.

Also, in some embodiments, the confirmation code may be generated based on contextual information of the system. That is, at least a part of the confirmation code may be associated with a contextual information of the system, such as a location of the system, an environmental noise level, peripherals connected to the system, a time of day, or a time of the shift etc. Accordingly, there may be different confirmation codes generated depending on the context that the system is in.

In a further embodiment, the confirmation code may be generated based on characteristics of the user. That is, at least a part of the confirmation code may be associated with a characteristic of the user, such as an identity of the user, a role of the user, demographic information of the user, etc. Accordingly, there may be different confirmation codes generated for different users. In addition, the confirmation code may be adapted such that it is appropriate for the user given known speech impediments, etc.

In yet another embodiment, the confirmation code may be generated based on contextual information of the user. That is, at least a part of the confirmation code may be associated with contextual information of the user, such as a location of the user, a state of the user, etc. Accordingly, there may be different confirmation codes generated depending on the context of the user.

In cases where the system to be controlled is a medical device (e.g., a sensor, a subject monitor, etc.), the confirmation code may be generated based on characteristics of the subject associated with the medical device. That is, the confirmation code may be generated based on a subject profile, treatments applied to the subject, medication given to the subject, real-time monitoring information of the subject, etc. To be clear, the characteristics of the system, characteristics of the user, contextual information of the system, and contextual information of the user may be obtained by any known means. This information may be retrieved from an external data source, may be entered by a user, may be determined based on data from on one or more sensors, may be derived from information from any of these sources, and/or may be obtained from system settings.

Additionally, the confirmation code may be generated based on previously generated confirmation codes. This may mean that the confirmation code differs from previously generated confirmation codes. The previously generated confirmation codes considered for this may be generated within a certain time frame of the present confirmation code to be generated, in some cases, the generated confirmation code may be substantially different to that of the previously generated confirmation codes, to avoid potential confusion and errors. In other cases, the generated confirmation code may be a variation on previously generated confirmation code.

Of course, the confirmation code may be generated based on a combination of the above factors. In some cases, different parts of the confirmation code may each correspond to one of the above factors. For example, a first part of the confirmation code may be based on system characteristics (e.g., a system ID), a second part of the confirmation code may be based on user characteristics (e.g., a user ID), and a third part of the confirmation code may be based on previously generated confirmation codes. As a result, the confirmation code may be 0101 JULIET BRAVO 15 - with 0101 being generated based on a system ID, JULIET BRAVO generated based on a user ID (e.g., initials of the user) and 15 generated as it is the 15^{th} confirmation code generated since the system turned on.

In yet further embodiments, the confirmation code may be generated based, at least in part, on characteristics of the predicted input. That is, depending on the action resulting from the input, the confirmation code may be adapted. Thus, for similar inputs, at least part of the confirmation code may be similar. This may enable a faster and more intuitive verification of the predicted input by the user.

Thus, the method may further comprise a sub-step of processing the characteristics of the predicted input to identify an input category and/or control signal category. The confirmation code may then be generated, at least in part, on the identified input category and/or the identified control signal category.

That is, the predicted input and contextual information may be processed and classified into one of the pre-defined categories or as "unknown". Each of these categories may have specific confirmation codes, or confirmation code rules defined. For example, there may be different confirmation codes or confirmation code rules defined if the input relates to different parts of the system.

In the case that the system is a subject monitor, there may be different confirmation codes or confirmation code rules defined if the input relates to different elements of the subject monitor, such as an ECG signal, ECG numerals, alarms, trends, etc., or to the actions that can be performed by using patient monitor. That is, categories can be defined in terms of the different vital signs, such as ECG, respiration, blood pressure, SPO2, etc. Then the classification of the predicted input may be processed to determine the intent and meaning. For example, a command such as "Show the respiration trend" will be mapped to the "respiration" category and will be given a corresponding confirmation code.

Each input category and/or control signal category may thus have specific confirmation code options assigned thereto. For example, if the predicted input category is ECG, the confirmation code may always start with "BRAVO" + another randomly selected word or number sequence. If the input category is "Blood pressure", the confirmation sequence can start with "ALPHA", and so on. Digit sequences can be used as part of the confirmation code also, such that the confirmation code for inputs in the ECG input category may always start with "10" + other randomly selected digits or words, and for the respiration input category may start with "20" other selected digits or phonetic words.

It should also be appreciated that various aspects of the confirmation code may also depend on a target error rate of the prediction of the input. These aspects may include a length and/or type of confirmation code. That is, the ruleset determining the generation of the confirmation code may depend on an acceptable rate of errors of prediction. The ruleset for generation of the confirmation code may therefore be configured to generate a less stringent confirmation code in cases where an increased error rate of the prediction of the input is acceptable. In some cases, the target error rate may depend on a criticality of the input. If the input is non-critical (i.e., it's actioning is of relatively little consequence) then the target error rate may be higher than if the input is critical (i.e., it's actioning has real world consequences).

For instance, if the input is to cause a non-critical action, it may not be strictly necessary for the user to closely interrogate the input predicted by this method. In this case, it may be acceptable for the error rate to be higher than usual. Thus, the confirmation code may be a short, predictable code that requires little of the user's attention to relay. In contrast, if the input is to cause a critical action with no room for error (e.g., relates to the dispensing of drugs for a patient), then the error rate may be much lower (and preferably zero). Thus, the confirmation code may be a long, complex and unpredictable, such that the user must exert attention in observing the displayed confirmation code (alongside the predicted input) to provide a confirmation. This will therefore increase the chance that the user has actually checked the predicted input.

By way of illustrative example, in the case that the system is a subject monitor, the length and/or type of the confirmation may depend on a target error rate that is based on an alarm type or patient criticality in a healthcare system context. For example, if the negative consequences of having a wrong recognition of the input is high then the length and/or heterogeneity of the confirmation code can be increased. To action inputs related to yellow alarms, a single confirmation word can be used as the confirmation code. For all red alarm related inputs, two confirmation words can be used as the confirmation code. Further, a stability of the subject relating to the subject monitor may be considered. When the subject condition instability is above a certain (critical) threshold, the consequences of an error can be higher. To prevent the chance of error, longer confirmation codes may be generated. When the subject is classified as stable, shorted confirmation codes may be used.

Further, it can be the case that the recognition accuracy (or specificity, or sensitivity) of certain codes is higher that then others. These can be determined based on test results. Then, the selection of which confirmation code is to be used in different scenarios may be based on this recognition accuracy. For instance, in critical situations confirmation codes that are recognized with higher specificity (when the code is recognized, you are more confident that the correct code is recognized) can be used. In less critical situations, words with higher sensitivity can be used (recognition of these codes is more frequent).

It should also be appreciated that various aspects of the confirmation code may also depend on an occurrence rate of the predicted input. These aspects may include a length and/or type of confirmation code. That is, the ruleset determining the generation of the confirmation code may depend on how often the predicted input is provided to the system. Similarly to the above, the ruleset for generation of the confirmation code may therefore be configured to generate a less stringent (e.g., higher sensitivity, shorter) confirmation code in cases where the predicted input is common in the given context (reflecting that the predicted input may be more likely to be correct). In contrast, the ruleset for generation of the confirmation code may therefore be configured to generate a more stringent (e.g., higher specificity, longer) confirmation code in cases where the predicted input is uncommon (reflecting that the predicted input may be less likely to be correct).

It will of course be appreciated that a combination of these above considerations for generating the confirmation code may be employed in different applications of the method. Moving on to step 130, once the confirmation code is generated, the predicted input and the generated confirmation code are displayed. This display step allows the user to visually verify the system's interpretation of their speech input and provides an opportunity for the user to confirm or correct the predicted input.

The confirmation code may be generated, and the confirmation code and predicted input displayed, whilst the user speaks. That is, the method may not wait for the user to finish speaking before displaying the predicted input and the generated confirmation code. As soon as an input is predicted from speech, it may be displayed alongside a confirmation code. This and various other options for generation and display will be described in more detail below.

In some cases, the predicted input may be displayed in the form of recognized text speech of the user. In other cases, the predicted input may be displayed by indicating the consequences of actioning the input. In each case, the confirmation code will also be displayed. The predicted input and generated confirmation code may be displayed in proximity to each other to increase the chance that the user has actually verified the prediction of the input. Nevertheless, the confirmation code and predicted input may be displayed in different areas. This will of course depend on the particular application of the invention.

In some embodiments, there may be multiple predicted inputs for one instance of detected speech of the user. In this case, each predicted input may have a different associated confirmation code. Each of the predicted inputs and associated confirmation codes may be displayed.

Furthermore, the confirmation code may be obscured so that only the user may see the confirmation code. That is, the confirmation code may be positioned such that only the user can see it or may be otherwise displayed in such a way that only the user can see it. By making the confirmation code secret in this way, it may be assured that only the user may trigger the input. This may therefore improve security of the system and prevent the opportunity for malicious confirmation.

In some cases, the predicted input and the confirmation code may be displayed sequentially (i.e., the predicted input is displayed first, and the confirmation code displayed after). The predicted input may be displayed as soon as possible, and in most cases the confirmation code may be displayed as soon as possible (as soon as it is generated, and/or as soon as the predicted input it executable and/or complete). However, there may also be instances where the relative time of display for the confirmation code to the predicted input changes. This relative time shift may account for the predicted input itself (e.g., the effect of the execution of the input, criticality of the input, target error rate of prediction of the input, etc.). For example, confirmation words can be displayed with 1 second delay to ensure that user has read the predicted input.

Alternatively, the confirmation code may be displayed simultaneously to the predicted input but may be displayed in a variety of positions relative to the predicted input. For example, the confirmation code may be displayed at the end of the predicted input, may be displayed between words of the predicted input, may be displayed at the start of the predicted input, or may be displayed in an interspersed manner within the predicted input (e.g., first part of confirmation code between words 2 and 3 of the predicted input, and a second part of the confirmation code at the end of the predicted input). In this way, it may be ensured that the confirmation code is displayed such that the chance the user has read the predicted input is increased.

Also, the display properties (e.g., font style, font size, colour, bold, italic, etc.) of the confirmation code may be selected in manner to ensure that the user has read the predicted input. For example, in some cases the display properties of the confirmation code may be selected such that it is easily differentiable from the predicted input. In other cases, the display properties of the confirmation code may be selected such that it is harder to differentiate from the predicted input.

After displaying the predicted input and confirmation code, in step 140 the method receives further input from the user.

The further input may be provided by the user in the form of further detected speech. However, embodiments are not limited hereto. The further input may be typed, written, or provided in any form suitable for the provision of the confirmation code.

The further input may include the confirmation code, in which case the method proceeds to step 150. However, the further input may not include the confirmation code, particularly where the user deems that the predicted input does not reflect their true intention. In this case, the user may provide further speech, which may be detected to predict further inputs or to modify the previous predicted input.

In some cases, the method may further comprise a step of analysing a second detected audio signal captured responsive to displaying the predicted input and confirmation code. In this case, the further input is provided in the form of speech. The detected audio signal may be processed with a second speech analysis algorithm, to identify the confirmation code in the second detected audio signal. In some cases, this second audio signal may be specifically adapted to identify the utterance of a confirmation code. In this case, the algorithm may be adapted to be more sensitive to the confirmation code to increase the chance that the confirmation code is detected, even in a noisy environment.

In step 150, upon receiving the further input from the user that includes the confirmation code, the method generates a control signal for controlling the system based on the predicted input. The control signal may then be provided to the system, such that the user input is actioned by the system. This final step executes the user's intended input, but only after receiving confirmation through the verification process.

To be clear, step 150 may comprise translating the predicted input into an action to be performed on or by the system. This may be achieved by any known technique for mapping or translating user inputs to system actions. In other embodiments, the input is simply provided to the system for further processing to action the input.

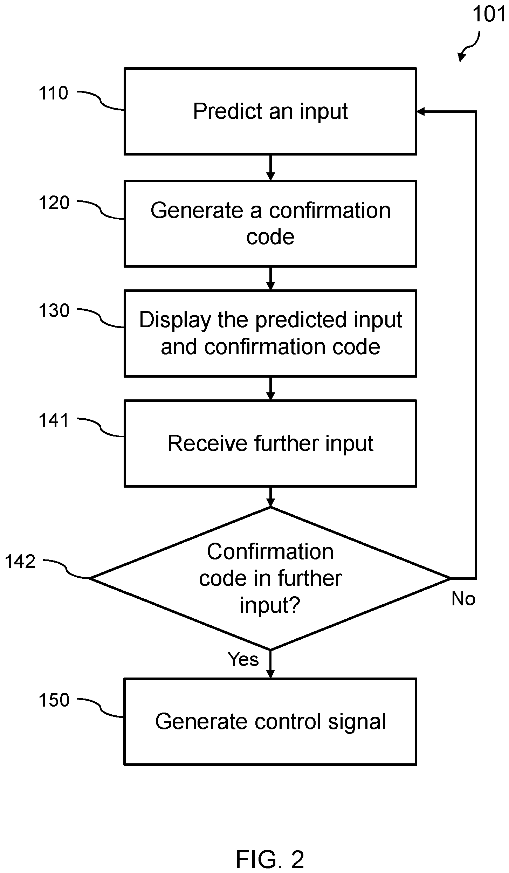

Moving on, FIG. 2 is a flow diagram of a further method for speech control of a system. This method demonstrates a comprehensive approach to speech-based system control with an emphasis on user verification and iterative refinement.

As demonstrated, the speech of the user is detected in step 110, and an input is predicted based on the detected speech. An associated confirmation code is then generated in step 120 and is then displayed alongside the predicted input in step 130. As steps 110, 120, 130 and 150 are similar to those described in reference to FIG. 1, further description is omitted for sake of brevity.

In step 141, a further input from the user is received. As above, this input may be in the form of speech, may be typed, or may be provided in any other appropriate form. In particular, the input may be based on a gazing pattern of the user (user looking at the predicted input and then the confirmation words) or may be based on detection of a specific motion pattern of the user (the user performs a movement associated with a certain confirmation code symbol, for example).

In step 142, it is determined whether the confirmation code is included in the further input. If the confirmation code includes the further input, the method proceeds to step 150 in which the control signal is generated based on the predicted input.

However, if the confirmation code is not present in the further input, the process demonstrates its iterative nature by looping back to predict a new input. This iterative approach allows for multiple attempts at confirmation, enhancing the accuracy and reliability of the speech control system. Indeed, if the user does not believe that the displayed predicted input matches their intention, they may simply carry on speaking until a predicted input and associated confirmation code are displayed that matches their intention. This loop may be performed continuously, such that the predicted input and confirmation code are continually updated until the user provides the confirmation code.

This loop is therefore advantageous over existing systems where users would typically need to indicate that the recognized speech is incorrect, which necessities an additional interaction step between the user and the system. In contrast, by provision of this loop, the user may simply continue speaking, indicating to the system that an updated input is desired. This indication is implied because a confirmation code is not recognized, and therefore the user may be providing additional speech from which an updated input may be predicted and displayed (with an updated confirmation code).

That is, if the confirmation code is not present in the further input, the predicted input is updated based on a further detected speech of the user. In addition, an updated confirmation code is generated, which differs from the previous confirmation code (thereby allowing the system to differentiate which predicted input the user subsequently verifies). The updated predicted input and the updated confirmation code are then displayed. The method may then loop again, if the user does not provide the confirmation code in a further input.

In one illustrative scenario, the following steps may be followed according to this embodiment:
(i) The user says "Pause";
(ii) The input "pause system" is predicted;
(iii) The confirmation code "DELTA ROMEO" is generated;
(iv) "Pause System DELTA ROMEO" is displayed;
(v) The user continues speaking and says "Pause Alarm";
(vi) The input "Pause alarm" is predicted;
(vii) The confirmation code "VICTOR OSCAR" is generated;
(viii) "Pause Alarm VICTOR OSCAR" is displayed;
(ix) User says or types "VICTOR OSCAR";
(x) A control signal is generated to pause alarm of the system.

The iterative nature of the process therefore provides control opportunities for refinement and correction of the predicted input by the user. If the initial prediction is incorrect or the user chooses not to confirm, the system can generate a new confirmation code, potentially based on updated information or a refined prediction.

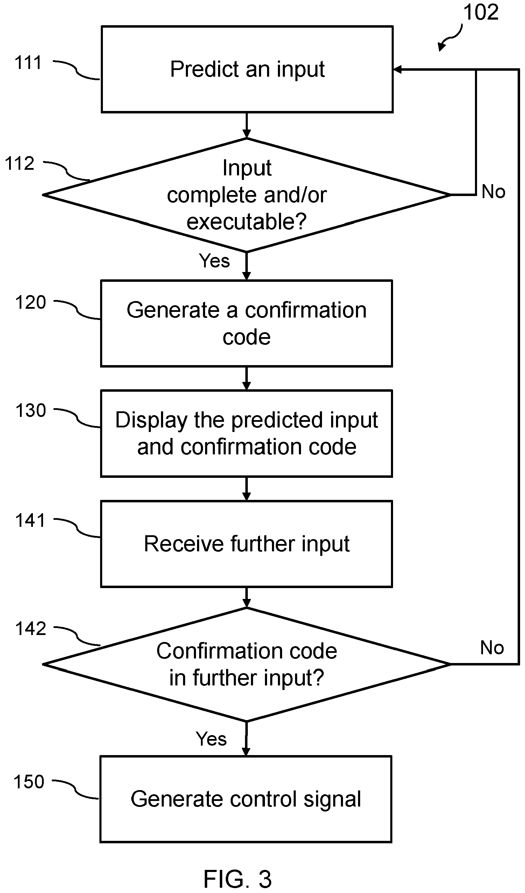

FIG. 3 is a flow diagram of another method for speech control of a system. This method emphasises iterative refinement with some limits as to the predicted inputs that may be displayed.

In step 111, an input is predicted based on detected speech of the user. In this case, the method does not instantaneously generate a confirmation code. Instead, step 112 is performed in which it is checked whether the input is complete and/or if the input is executable. That is, it is checked whether the user has provided a complete input. Equally it is checked whether the input provided by the user is executable.

To determine whether the user has spoken a complete input, characteristics of the detected speech may be utilised. That is, the detected speech may be processed to identify characteristics of the detected speech. The user speech characteristics may include a speech rate change, a silence pattern change, a prosody feature, a spectral feature, and/or the utterance of a target word. Thus, based on these features it is determined whether the user has completed what they intend to be an input. If it is determined that the user has uttered a complete input, the method may proceed to generation of a confirmation code, display of the confirmation code and predicted input, etc.

In some additional or alternative cases, in step 112 it may be determined whether the predicted input is executable for controlling the system. If the predicted input from the detected speech cannot be translated into an action for controlling the system, then the steps of generation of a confirmation code, display of the confirmation code and predicted input, etc will not be performed.

In case the input from the user is incomplete, and/or the predicted input resulting from the detected speech is non-executable, the method may continue to detect speech of the user and update the predicted input. Once the input from the user is complete, and/or the predicted input resulting from the detected speech is executable, the method may proceed to steps 120 onwards. These steps are similar to those described above, and so repeated description is omitted here for sake of brevity.

In one illustrative scenario, the following steps may be followed according to this embodiment:
(i) The user says "Pause";
(ii) The input is considered incomplete as the user continues speaking at normal rate;
(iii) The predicted input "Pause" may be displayed, but without an associated confirmation code, as the input is considered incomplete;
(iv) The user continues speaking and says "Pause Alarm";
(v) The input is considered complete as the user stops speaking;
(vi) The input "Pause alarm" is predicted;
(vii) The predicted input is considered executable by the system;
(viii) The confirmation code "VICTOR OSCAR" is generated;
(ix) "Pause Alarm VICTOR OSCAR" is displayed;
(x) User says or types "VICTOR OSCAR";
(xi) A control signal is generated to pause alarm of the system.

This method therefore only provides the precited input and confirmation code when it is expected that the user has finished entering the input, and the input is executable. As a result, superfluous generation of confirmation codes and presentation of said confirmation codes and associated predicted inputs is avoided, reducing computational burden and reducing potential user confusion.

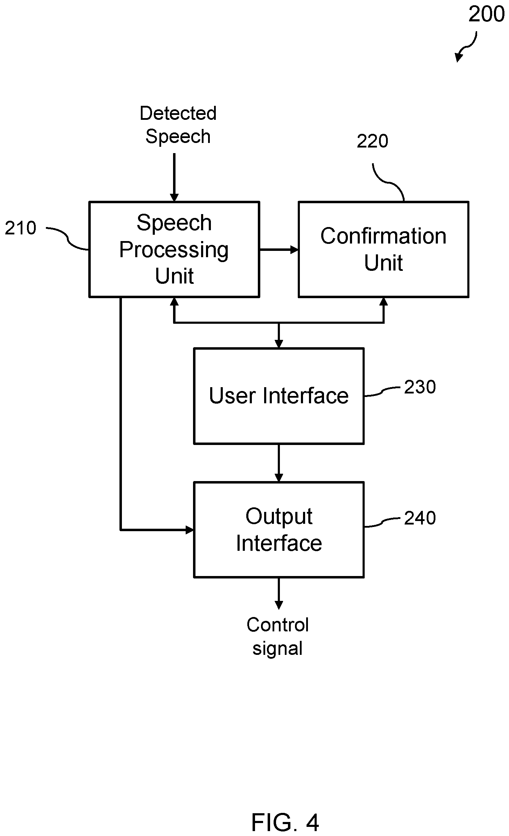

FIG. 4 illustrates a block diagram of a controller 200 for a system. Controller (i.e., speech control system) 200 comprises several interconnected components that work together to process speech input and generate control signals based on user speech. The controller 200 may be provided in the form of an arrangement of different communicate coupled components or may be provided in the form of one device.

The speech control system 200 includes a speech processing unit 210. The speech processing unit 210 is configured to predict an input for control of the system based on detected speech of a user. The speech processing unit 210 receives detected speech as input and processes this speech to interpret the user's intended command, action, or query. The detected speech may be received from a microphone arrangement, for example.

A confirmation unit 220 is connected to the speech processing unit 210 and is configured to generate a confirmation code based on the predicted input received from the speech processing unit 210. The confirmation code may be generated according to a defined ruleset, which may depend on various factors such as user characteristics context, system characteristics/context, input characteristics, and previously generated confirmation codes. Various parameters (such as length, complexity, type) of confirmation code may depend on these factors.

The speech control system 200 also includes a user interface 230. The user interface 230 is configured to display the predicted input and the generated confirmation code. The user interface 230 receives this information from both the speech Processing unit 210 and the confirmation unit 220. By displaying this information, the user interface 230 allows the user to verify the system's interpretation of their speech input before any action is taken.

An output interface 240 is also part of the speech control system 200. The output interface 240 is configured to generate a control signal for controlling the system based on the predicted input. The output interface 240 generates this control signal responsive to receiving a further input from the user including the confirmation code. This ensures that the system only executes commands that have been accurately interpreted and confirmed by the user.

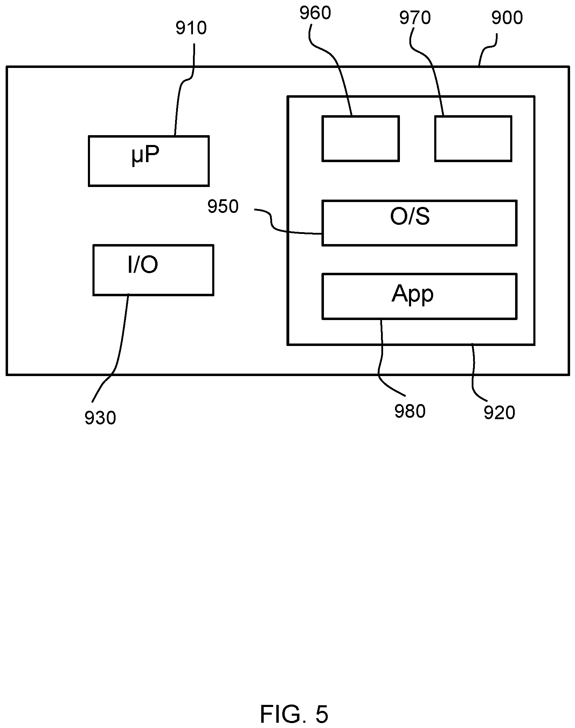

FIG. 5 illustrates an example of a computer 900 within which one or more parts of an embodiment may be employed. Various operations discussed above may utilize the capabilities of the computer. For example, one or more parts of a proposed embodiment may be incorporated in any element, module, application, and/or component discussed herein. In this regard, it is to be understood that system functional blocks can run on a single computer or may be distributed over several computers and locations (e.g. connected via internet), such as a cloud-based computing infrastructure.

The computer 900 includes, but is not limited to, PCs, workstations, laptops, PDAs, palm devices, servers, storages, and the like. Generally, in terms of hardware architecture, the computer 900 may include one or more processors 910, memory 920 and one or more I/O devices 930 that are communicatively coupled via a local interface (not shown). The local interface can be, for example but not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the aforementioned components.

The processor 910 is a hardware device for executing software that can be stored in the memory 920. The processor 910 can be virtually any custom made or commercially available processor, a central processing unit (CPU), a digital signal processor (DSP), or an auxiliary processor among several processors associated with the computer 900, and the processor 910 may be a semiconductor-based microprocessor (in the form of a microchip) or a microprocessor.

The memory 920 can include any one or combination of volatile memory elements (e.g., random access memory (RAM), such as dynamic random access memory (DRAM), static random access memory (SRAM), etc.) and non-volatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the memory 920 may incorporate electronic, magnetic, optical, and/or other types of storage media. Note that the memory 920 can have a distributed architecture, where various components are situated remote from one another, but can be accessed by the processor 910.

The software in the memory 920 may include one or more separate programs, each of which comprises an ordered listing of executable instructions for implementing logical functions. The software in the memory 920 includes a suitable operating system (O/S) 950, compiler 960, source code 970, and one or more applications 980 in accordance with exemplary embodiments. As illustrated, the application 980 comprises numerous functional components for implementing the features and operations of the exemplary embodiments. The application 980 of the computer 900 may represent various applications, computational units, logic, functional units, processes, operations, virtual entities, and/or modules in accordance with exemplary embodiments, but the application 980 is not meant to be a limitation.

The operating system 950 controls the execution of other computer programs, and provides scheduling, input-output control, file and data management, memory management, and communication control and related services. It is contemplated by the inventors that the application 980 for implementing exemplary embodiments may be applicable on all commercially available operating systems.

Application 980 may be a source program, executable program (object code), script, or any other entity comprising a set of instructions to be performed. When a source program, then the program is usually translated via a compiler (such as the compiler 960), assembler, interpreter, or the like, which may or may not be included within the memory 920, so as to operate properly in connection with the O/S 950. Furthermore, the application 980 can be written as an object oriented programming language, which has classes of data and methods, or a procedure programming language, which has routines, subroutines, and/or functions, for example but not limited to, C, C++, C#, Pascal, Python, BASIC, API calls, HTML, XHTML, XML, ASP scripts, JavaScript, FORTRAN, COBOL, Perl, Java, ADA, .NET, and the like.

The I/O devices 930 may include input devices such as, for example but not limited to, a mouse, keyboard, scanner, microphone, camera, etc. Furthermore, the I/O devices 930 may also include output devices, for example but not limited to a printer, display, etc. Finally, the I/O devices 930 may further include devices that communicate both inputs and outputs, for instance but not limited to, a NIC or modulator/demodulator (for accessing remote devices, other files, devices, systems, or a network), a radio frequency (RF) or other transceiver, a telephonic interface, a bridge, a router, etc. The I/O devices 930 also include components for communicating over various networks, such as the Internet or intranet.

If the computer 900 is a PC, workstation, intelligent device or the like, the software in the memory 920 may further include a basic input output system (BIOS) (omitted for simplicity). The BIOS is a set of essential software routines that initialize and test hardware at start-up, start the O/S 950, and support the transfer of data among the hardware devices. The BIOS is stored in some type of read-only-memory, such as ROM, PROM, EPROM, EEPROM or the like, so that the BIOS can be executed when the computer 900 is activated.

When the computer 900 is in operation, the processor 910 is configured to execute software stored within the memory 920, to communicate data to and from the memory 920, and to generally control operations of the computer 900 pursuant to the software. The application 980 and the O/S 950 are read, in whole or in part, by the processor 910, perhaps buffered within the processor 910, and then executed.

When the application 980 is implemented in software it should be noted that the application 980 can be stored on virtually any computer readable medium for use by or in connection with any computer-related system or method. In the context of this document, a computer readable medium may be an electronic, magnetic, optical, or other physical device or means that can contain or store a computer program for use by or in connection with a computer related system or method.

The application 980 can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium.

The proposed method(s), device(s) and/or system(s) may be implemented in hardware or software, or a mixture of both (for example, as firmware running on a hardware device). To the extent that an embodiment is implemented partly or wholly in software, the functional steps illustrated in the process flow diagrams may be performed by suitably programmed physical computing devices, such as one or more central processing units (CPUs) or graphics processing units (GPUs). Each process - and its individual component steps as illustrated in the flow diagrams - may be performed by the same or different computing devices. According to embodiments, a computer-readable storage medium stores a computer program comprising computer program code configured to cause one or more physical computing devices to carry out a control method as described above when the program is run on the one or more physical computing devices.

Storage media may include volatile and non-volatile computer memory such as RAM, PROM, EPROM, and EEPROM, optical discs (like CD, DVD, BD), magnetic storage media (like hard discs and tapes). Various storage media may be fixed within a computing device or may be transportable, such that the one or more programs stored thereon can be loaded into a processor.

To the extent that an embodiment is implemented partly or wholly in hardware, some of the blocks shown in the block diagrams may be separate physical components, or logical subdivisions of single physical components, or may be all implemented in an integrated manner in one physical component. The functions of one block shown in the drawings may be divided between multiple components in an implementation, or the functions of multiple blocks shown in the drawings may be combined in single components in an implementation. Hardware components suitable for use in embodiments of the present invention include, but are not limited to, conventional microprocessors, application specific integrated circuits (ASICs), and field-programmable gate arrays (FPGAs). One or more blocks may be implemented as a combination of dedicated hardware to perform some functions and one or more programmed microprocessors and associated circuitry to perform other functions.

Variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". Any reference signs in the claims should not be construed as limiting the scope.

The flow diagrams and block diagrams in the Figures illustrate the architecture, functionality, and operation of possible implementations of systems, methods, and computer program products according to various embodiments of the present invention. In this regard, each block in the flow diagrams or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flow diagrams and combinations of blocks in the block diagrams and/or flow diagrams, can be implemented by special purpose hardware-based systems that perform the specified functions or acts or carry out combinations of special purpose hardware and computer instructions.

## Claims

1. A method for speech control of a system, comprising:
predicting (110) an input for control of the system based on detected speech of a user;
generating (120) a confirmation code;
displaying (130) the predicted input and the generated confirmation code; and
responsive to receiving (140) a further input from the user including the confirmation code, generating (150) a control signal for controlling the system based on the predicted input.

2. The method of claim 1, wherein generating (120) the confirmation code is performed responsive to detecting speech of the user or predicting (110) the input.

3. The method of claim 1 or 2, wherein generating (120) the confirmation code is based, at least in part, on characteristics of the system, characteristics of the user, previously generated confirmation codes, contextual information of the system and/or contextual information of the user.

4. The method of any of claims 1-3, wherein generating (120) the confirmation code is based, at least in part, on characteristics of the predicted input.

5. The method of claim 4, further comprising processing the characteristics of the predicted input to identify an input category and/or control signal category; and generating (120) the confirmation code is based, at least in part, on the identified input category and/or the identified control signal category.

6. The method of any of claims 1-5, wherein a length and/or type of the generated confirmation code is based on a target error rate of prediction of the input, an occurrence rate of the predicted input, and/or characteristics of the predicted input.

7. The method of any of claims 1-6, wherein at least part of the confirmation code includes phonetic words and/or digits.

8. The method of any of claims 1-7, further comprising analysing a first detected audio signal captured prior to displaying (130) the predicted input and confirmation code, with a first speech analysis algorithm, to predict (110) the input.

9. The method of claim 8, wherein the first speech analysis algorithm generates recognized text corresponding to speech of the user, predicting the input is based on the recognized text, and the method further comprises augmenting the recognized text based on expected input features to generate augmented recognized text, and wherein predicting the input is based on the augmented recognized text.

10. The method of any of claims 1-9, further comprising analysing a second detected audio signal captured responsive to displaying (130) the predicted input and confirmation code, with a second speech analysis algorithm, to identify (142) the confirmation code in the second detected audio signal.

11. The method of any of claims 1-10, further comprising determining (112) whether the user has spoken a complete input based on the detection of user speech characteristics of the detected speech, and wherein displaying (130) the predicted input and the confirmation code is performed responsive to determining that the user has spoken a complete input, and
optionally wherein the user speech characteristics include a speech rate change, a silence pattern change, a prosody feature, a spectral feature, and/or the utterance of a target word.

12. The method of any of claims 1-11, further comprising determining (112) whether the predicted input is executable for controlling the system, and wherein displaying (130) the predicted input and the confirmation code is performed responsive to determining that the predicted input is executable.

13. The method of any of claims 1-12, further comprising:
updating the predicted input based on a further detected speech of the user; generating an updated confirmation code; and
displaying the updated predicted input and the updated confirmation code.

14. A computer program comprising computer program code means adapted, when said computer program is run on a computer, to implement the method of any of claims 1-13.

15. A controller for a system, comprising:
a speech processing unit (210) configured to predict an input for control of the system based on detected speech of a user;
a confirmation unit (220) configured to generate a confirmation code;
a user interface (230) configured to display the predicted input and the generated confirmation code; and
an output interface (240) configured, responsive to the controller receiving a further input from the user including the confirmation code, to generate a control signal for controlling the system based on the predicted input.
